# NEUE EUROPÄISCHE PATENTSCHRIFT

(11) **EP 1 252 814 B2**
(45) Veröffentlichungstag und Bekanntmachung des Hinweises auf die Entscheidung über den Einspruch: **28.09.2011**
(45) Hinweis auf die Patenterteilung: 21.06.2006
(21) Anmeldenummer: 02009011.4
(22) Anmeldetag: 23.04.2002
(51) Int. Cl.: A01D 89/00

(54) **Aufsammler für landwirtschaftliche Erntemaschine mit einem Niederhalter**
Pick-up for harvester with pressure element
Ramasseur pour récolteuse avec élément presseur

(30) Priorität: 24.04.2001 DE 10120204
(43) Veröffentlichungstag der Anmeldung: 30.10.2002
(73) Patentinhaber: Usines Claas France, 57140 St. Remy/Woippy (FR)
(72) Erfinder: Scholz, Egbert, 33378 Rheda-Wiedenbrück (DE); Nonhoff, Ansgar, 34260 Kaufungen (DE); Bonnewitz, Bernard, 57130 Vaux (FR)

(56) Entgegenhaltungen:
- EP-A- 0 401 542
- DE-A- 19 750 954
- DE-A1- 3 707 788
- SU-A1- 880 332
- US-A- 2 682 743
- US-A- 4 059 234

## Beschreibung

Die Erfindung betrifft einen Aufsammler für Erntemaschine mit einem Aufsammelorgan und einem hierzu obenseitig angeordneten quer zur Fahrtrichtung der Erntemaschine erstreckenden Niederhalter gemäß dem Oberbegriff des Anspruchs 1. Eine derartiger Aufsammler ist bereits aus US-A-2 682 743 bekannt.

Landwirtschaftliche Erntemaschinen werden mit Aufsammlern ausgestattet, um auf einem Bearbeitungsfeld liegendes Erntegut während der Fahrt aufnehmen zu können. Hierfür haben sich überwiegend sogenannte Pickups oder Rakeups durchgesetzt. Diese Aufsammler nehmen auf dem Boden liegendes, zuvor in Schwaden abgelegtes Erntegut von dort auf und führen es den weiteren Bearbeitungsorganen der Erntemaschine zur weiteren Verarbeitung zu.
Aufsammler werden an selbstfahrenden Erntemaschinen wie zum Beispiel an Mähdreschern oder Feldhäckslern sowie an gezogenen Erntemaschinen wie beispielsweise an Feldhäckslern, Ladewagen oder Pressen eingesetzt. Je nach Einsatz nehmen diese Getreide, Stroh, Gras, Anwelksilage, Heu oder sonstige Erntegüter mit unterschiedlichen Eigenschaften von der Erntefläche möglichst bodenschonend und gleichzeitig verlustarm auf. Hierzu werden diese Aufsammler teilweise von der Bewegung der Erntemaschine entkoppelt, durch einen über die gesamte Arbeitsbreite bodenanpassenden flexiblen Aufbau mittels Tastlementen, bodennah vor der Erntemaschine herbewegt.
Mit den zunehmenden Ernteleistungen der Erntemaschinen nehmen folglich auch die Arbeitsbreiten der Aufsammler und die Erntegeschwindigkeiten der Erntemaschinen zu. Als Folge davon müssen die Aufnahmegeschwindigkeiten der Aufsammler an diese Bedingungen angepasst werden. Dies wird durch eine höhere Umlaufgeschwindigkeiten der Zinken, der Rechen oder der Bänder erreicht. Folglich bewirkt dieses, dass das aufgenommene Erntegut, je nach Erntegutart, -menge und -masse und Ausgestaltung der Aufsammeleinrichtung, von beispielsweise der Aufsammeltrommel abhebt und den nachfolgenden Fördereinrichtungen nicht mehr sicher und kontinuierlich zugeführt werden kann. Ein Aufsammler der gattungsgemäßen Art wird beispielsweise in der EP 0 401 542 A1 mit einem Niederhalter gezeigt. Hier ist der Niederhalter als ein sich quer zur Fahrtrichtung erstreckender Rollenniederhalter ausgeführt. Oberhalb der Aufsammeltrommel ist zwischen einem Rollenniederhalter und einer nachfolgenden Fördereinrichtung, eine weitere Leitrolle eingeschaltet. Diese bewirkt, dass das Erntegut unterhalb der horizontalen Mittelebene der nachfolgenden Fördereinrichtung zuführt wird. Dies begünstigt eine gleichmäßige und kontinuierliche Zuführung des Erntegut zu der Fördereinrichtung. Mit den zunehmenden Erntegutdurchsätzen durch die Erntemaschinen beziehungsweise mit den größeren Aufnahmebreiten der Aufsammler, müssen ferner in den Aufsammlern eine immer größere Menge an Erntegut auf die Breite der nachfolgenden Bearbeitungsorgane der Erntemaschine zusammengeführt werden. Dabei kann es in dem Aufsammler an der gutzusammenführenden Fördereinrichtung, welche in der Regel eine Förderschnecke ist, zu einer gutabweisenden Überlastung und einer Stauung von Erntegut kommen. Im Besonderen kann es dann zu Gutflussstauungen kommen, wenn diese gutzusammenführende Fördereinrichtung, wie allgemein in Ballenpressen ausgeführt, von zwei beidseitig in den Gutstrom eingreifende oberschlächtig fördernde Schnecken gebildet wird. Hierbei kann dann das überzählige Erntegut zwischen der Leittrommel und den Schnecken zu einer Rotation angeregt werden. Werden nun diese Gutansammlungen von den nachfolgenden Förder- und Bearbeitungseinrichtungen in der Erntemaschine erfasst, kann dies zu Überlastungen an den Förder- und Bearbeitungseinrichtungen beziehungsweise in den zugehörigen Antrieben der Erntemaschine sowie folglich zu Arbeitsunterbrechungen führen.

Es ist nun Aufgabe der Erfindung die eingangs genannten Aufsammlern dahingehend zu verbessern, dass die aufgezeigten Mängel behoben beziehungsweise zumindest eine weitgehende Abhilfe geschaffen wird.
Die Aufgabe der Erfindung wird durch einen Niederhalter mit den kennzeichnenden Merkmalen des Anspruches 1 gelöst. Das erfindungsgemäße Gutleitelement bewirkt vorteilhaft, dass das Erntegut schon im Wirkbereich des Niederhalters eine quer zur Fahrtrichtung beziehungsweise Gutflussrichtung gerichtete Förderung erfährt und somit schon vor dem Erreichen der nachgeschalteten Fördereinrichtung, eine die Förderrichtung dieser Fördereinrichtung unterstützende Ausrichtung erzielt wird. Vorteilhaft trifft hierdurch das Erntegut nicht mehr senkrecht auf die nachfolgende Fördereinrichtung auf, sondern läuft je nach Ausrichtung und Einfluss des Gutleitelementes mit angestelltem Winkeln in den Wirkungsbereich des nachfolgenden Förderelementes ein. Das Erntegut kann daher von dieser besser angenommen und weitergefördert werden. Zur Niederhaltung des Erntegutes im Aufsammler eignen sich Rollenniederhalter, weil sie eine gute Niederhaltung, eine gleichzeitige Gutumlenkung mit geringen Reibungsverlusten bei hohen Gutflussgeschwindigkeiten durch den Aufsammler gewährleisten. Weiterhin erbringt die vorgeschlagene Lösung eine schonende Zusammenführung des Erntegutes und dies im Besonderen bei stark brüchigem Erntegut. Durch die erfindungsgemäße Lösung entsteht weiterhin eine vergleichmäßigte Gutförderung und die nachfolgenden Förderelemente werden vorteilhaft vor Überlastungen geschützt. Der Erntegutfluss durch den Aufsammler erfolgt ohne Störungen, so dass der Bediener der Erntemaschine bei der Beobachtung des Gutflusses entlastet wird. Er kann somit in der Summe die Erntemaschine näher an die Leistungsgrenze herangefahren und eine höhere Durchsatzleistung der Erntemaschine erzielen.

Vorzugsweise wird ein Gutleitelement in Verbindung mit einem Stabniederhalter und/oder einem Blechniederhalter verwendet. Diese Arten von Niederhaltern sind an Aufsammlern bekannt und haben sich jeweils für den Verwendungszweck der Erntemaschine angepasst als besonders vorteilhaft herausgestellt. Stabniederhalter erbringen vorteilhaft die Möglichkeit, dass die das Erntegut niederhaltenden Stäbe, gleichzeitig gegenüber dem Aufnahmeorgane angestellt ausgeführt in den Erntegutfluss eingreifen und somit die erfindungsgemäße Förderung quer zur Fahrtrichtung des Aufsammlers bewirken können. Auch über die Aufnahmebreite des Aufsammler erstreckende Blechniederhalter eignen sich hier besonders vorteilhaft, da sie leicht entsprechend der gewünschten Niederhaltung des Erntegutes geformt und zusätzlich mit Prägungen zur erfindungsgemäßen Gutleitung ausgestaltete werden können.

Im Besonderen eignen sich an diesen Niederhaltern Gutleitelemente in Form wenigstens eines Stabes und/oder eines Bleches und/oder einer Schneckenwendelung. Diese Gutleitelemente lassen sich in besonders vorteilhafter Weise an der dem Erntegut zugewandten Seite des Niederhalters mit einer gegenüber der Erntegutflussrichtung angestellten und in den Erntegutstrom eingreifenden Ausrichtung befestigen. Ein erfindungsgemäß angeordneter Stab und/oder Blech kann sich vorteilhaft auch über den Wirkungsbereich des Niederhalters hinaus erstrecken und dann weiter auf das Erntegut auf dem Weg durch den Aufsammler einwirken.

In einer besonderen Ausgestaltung der Erfindung bewirkt das Gutleitelement wenigstens bereichsweise eine Förderung des Erntegutes quer zur Gutflussrichtung. Eine derartige Gutförderung ist vorteilhaft an Aufsammlern einsetzbar, die das Erntegut entgegen der Fahrtrichtung abgegeben. Die Abgabe des Erntegutes erfolgt an diesen Aufsammlern mit einer geringeren Breite als die Aufnahme von der Bearbeitungsfläche. In dem Aufsammler wird das Erntegut mittels einer Förderschnecken von der Aufnahmebreite auf die Abgabebreite zusammengeführt. Auf der Breite des Abgabebereichs findet daher keine Zusammenförderung des Erntegutes statt, sondern das Erntegut durchläuft den Aufsammler entgegen der Fahrtrichtung auf dieser Breite ohne eine Querförderung. Vorteilhaft bewirkt das wenigstens eine Gutleitelement dann ebenfalls nur im Wirkbereich des Niederhalters eine erfindungsgemäße Förderung quer zur Gutflussrichtung, in welchem auch eine Querförderung durch die nachfolgenden Fördereinrichtung erfolgt.

Bei einer Verwendung des Niederhalters an einem Aufsammler, welcher das Erntegut entgegen der Fahrtrichtung an die Bearbeitungseinrichtung einer Erntemaschine übergibt, ist es in einer Weiterführung der Erfindung vorgesehen, dass wenigstens ein Gutleitelemente so angestellt in den Erntegutfluss eingreift, dass hierdurch eine Zusammenführung des Erntegutes zur Abgabestelle des Aufsammlers hin bewirkt wird. Besonders vorteilhaft ist eine beiderseitige Anordnung von Gutleitelementen mit dem Ziel einer Förderung des Erntegutes zur Abgabestelle hin. Eine Zusammenführung des Erntegutes zur Abgabestelle des Aufsammlers hin, wird hierdurch mit einfachen Mitteln erreicht. Auch eine Querbewegung des Erntegutes von den seitlichen Wandungen des Aufsammlers weg wird vorteilhaft bewirkt und eine bessere Gutaufnahme der nachgeschalteten Förderschnecke erreicht. Vorteilhaft kann hiermit eine Verringerung der Erstreckung des nachgeschalteten Förderelementes im Aufsammler erreicht werden.

In einer weiteren Ausgestaltung der Erfindung ist das Gutleitelement als wenigstens eine umfangseitige Schneckenwendelung auf einer Niederhalterrolle ausgeführt. Eine Niederhalterrolle mit der umfangseitigen Schneckeriwendelung bewirkt vorteilhaft mit dem Abrollen auf dem Erntegut eine erfindungsgemäße Bewegung des Erntegutes quer zur Gutflussrichtung und damit auch eine Vergleichmäßigung des in den Einzugsbereich einlaufenden Erntegutes.

In einer weiteren Ausgestaltung der Erfindung ist zumindest eine Niederhalterrolle des Niederhalters zumindest bereichsweise mit unterschiedlichen Durchmessern ausgeführt. Diese Ausgestaltung der Erfindung bewirkt vorteilhaft, dass die Umfangsgeschwindigkeiten der Niederhalterrolle bereichsweise unterschiedlich sind und dass hierdurch das Erntegut in Richtung des Rollenbereiches mit dem geringeren Durchmesser erfindungsgemäß quer zur Gutflussrichtung gefördert wird.

Vorzugsweise wird in einer Weiterbildung der Erfindung zumindest eine Niederhalterrolle aktiv angetrieben. Die erfindungsgemäße Gutförderungen kann hierdurch gezielt erhöht werden. Ferner bietet ein solcher Antrieb eine Drehzahlstellmöglichkeit. Die Wirkung der Gutleitelemente auf einer Niederhalterrolle kann somit vorteilhaft an die Gegebenheiten und Eigenschaften des Erntegutes angepasst werden. Ferner ist vorteilhaft eine fahrgeschwindigkeitsabhängige Antriebssteuerung der Niederhalterrolle realisierbar, wodurch eine gutschonende, erfindungsgemäße Zusammenführung des Erntegutes erreicht wird.

In einer vorteilhaften Weiterbildung der Erfindung treibt zumindest eine Niederhalterrolle des Niederhalters wenigstens eine weitere Niederhalterrolle an. Eine vorteilhafte Anwendung findet diese Weiterbildung dann, wenn der Niederhalter mit zumindest zwei Niederhalterrollen ausgeführt ist. Es können dann vorteilhaft mittels der Wahl der Übersetzung des Antriebes gleiche oder unterschiedliche Umfangsgeschwindigkeiten der Niederhalterrollen realisiert werden. Diese Antriebsverbindung bewirkt vorteilhaft eine vergrößerte erfindungsgemäße Querförderung, da je nach Auslegung der Antriebsverbindung eine Geschwindigkeitsdifferenz zwischen der Geschwindigkeit des Erntegutes und der Umfangsgeschwindigkeit einer angetriebenen Niederhalterrolle erzeugt werden kann.

In einer weiteren Ausgestaltung der Erfindung setzt sich der Niederhalter aus wenigstens zwei Niederhalterrollen mit unterschiedlichen Durchmessern zusammen. In vorteilhafter Weise lässt sich die Wirkung einer erfindungsgemäß ausgestatteten Niederhalterrolle hierdurch verstärken. Durch die erfindungsgemäßen unterschiedlichen Durchmesser der Niederhalterrollen ergeben sich unterschiedliche Eingriffsflächen der Niederhalterrollen in das geförderte Erntegut. Eine Niederhalterrolle mit einem Gutleitelement kann mittels eines größeren Durchmessers einen verlängerten Eingriff und damit auch eine vergrößerte Wirkung des Gutleitelementes vorteilhaft bewirken.

Ferner ist es an einer Niederhalterrolle mit wenigstens einem Gutleitelement besonders kostengünstig, die Wirkung der Gutleitelemente durch eine Abbremsung der Niederhalterrolle zu erhöhen. Diese eventuell einstellbare Bremseinrichtung verursacht eine reduzierte Umfangsgeschwindigkeit der Niederhalterrolle gegenüber der Gutgeschwindigkeit und bewirkt durch die erfindungsgemäßen Gutleitelemente auf der gebremsten Niederhalterrolle vorteilhaft eine stärkere Förderung des Erntegutes quer zur Gutflussrichtung.

In einer weiteren Ausgestaltung der Erfindung ist es vorgesehen, dass der erfindungsgemäße Niederhalter mit wenigstens einer Einrichtung zur Veränderung des Auflagedruckes wenigstens eines Niederhalterelementes auf das Erntegut versehen ist. Vorteilhaft kann das Eigengewicht des Niederhalters beziehungsweise des jeweiligen Niederhalterelementes verringert werden, um eine Behinderung des Gutflusses oder eine Beschädigung des Erntegutes durch den Niederhalter zu verringern und eine Verbesserung der Fördereigenschaft zu bewirken. Eine erfindungsgemäße Erhöhung des Auflagedruckes hat einen verbesserten Eingriff des Gutleitelementes in die Erntegutoberfläche zur Folge und bewirkt vorteilhaft eine verbesserte erfindungsgemäße Förderung des Erntegutes quer zur Gutflussrichtung. Die Einrichtung zur Beeinflussung des Auflagedruckes, kann vorteilhaft eine vom Bediener der Erntemaschine während dem Ernten fernsteuerbare Einrichtung sein, so dass der Bediener jederzeit den Emteguteigenschaften entsprechend den gewünschten Auflagedruck einstellen kann.

Anhand der nachfolgenden Zeichnungen wird die Erfindung an Ausführungsbeispielen näher erläutert. Dabei zeigen:
- Figur 1: einen Längsschnitt durch eine Pickup mit einem Rollenniederhalter,
- Figur 2: eine Draufsicht auf die in Figur 1 dargestellte Pickup,
- Figur 3: einen Längsschnitt durch eine Pickup mit einem Blechniederhalter und
- Figur 4: eine Draufsicht auf die zum Teil in Figur 3 gezeigte Pickup.

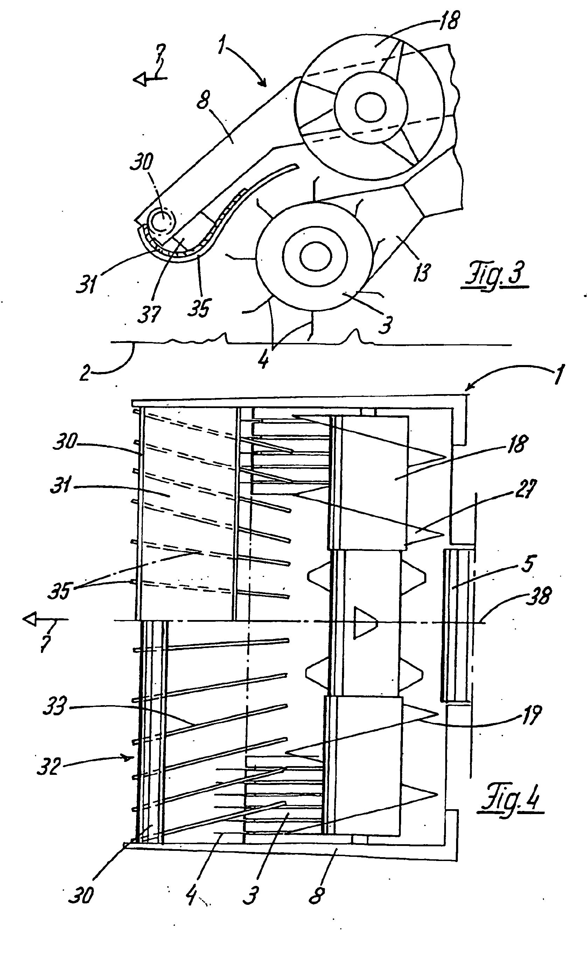

Die Fig. 3 und 4 zeigen eine nicht erfindungsgemäße Ausführungsform einer Pickup.

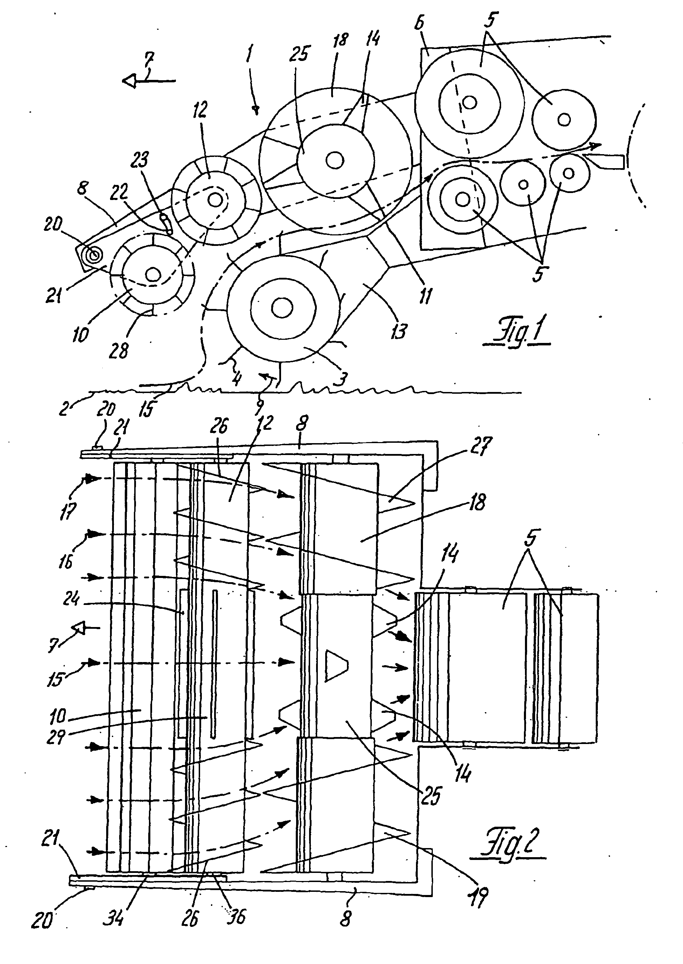

Figur 1 zeigt einen Aufsammler in Form einer Pickup 1 mit einem Rollenniederhalter 10,12,21 in einem schematischen Längsschnitt, in etwa durch die Mitte des Aufsammlers. Die gezeigte Pickup 1 nimmt auf dem Boden 2 liegendes Erntegut auf, führt dieses zusammen und übergibt es dann, entgegen der Fahrtrichtung 7, an die nachfolgenden Einzugswalzen 5. Das aufgenommene Erntegut wird dabei etwa entlang der eingezeichneten Gutflusslinie 15 durch die Pickup 1 gefördert. Die Pickup 1 ist über einen Halterahmen 6 mit den weiteren Einrichtungen der Erntemaschine höhenbeweglich verbunden. An diesem Halterahmen 6 angelenkt, erstreckt sich in Fahrtrichtung 7 der Erntemaschine ein Trägerelement 13. Obenseitig bildet dieses Trägerelement 13 einen wannenförmigen Förderboden 11. An dem in Fahrtrichtung 7 vorderen Ende des Trägerelementes 13, ist das Aufsammelorgan hier als eine Aufsammeltrommel 3 ausgeführt angeordnet. Diese Aufsammeltrommel 3 erstreckt sich quer zur Fahrtrichtung 7 und gibt die Aufnahmebreite der Pickup 1 vor. Über die Aufnahmebreite erstrecken sich umfangsseitig der Aufsammeltrommel 3 mehrere Zinkenträger, welche jeweils mit einer Vielzahl von umfangsseitig durch die Mantelfläche der Aufsammeltrommel 3 hindurchragenden Zinken 4 bestückt ist. Diese Zinkenträger mit den zugeordneten Zinken 4, werden von der Erntemaschine in Drehrichtung 9 angetrieben. Dabei heben sie das Erntegut von dem Boden 2 ab und fördern dieses umfangsseitig entlang der Aufsammeltrommel 3 bis auf den Förderboden 11. Das Erntegut erfährt hierbei zuerst eine vertikale und anschließend eine zunehmend horizontale Förderbewegung. Damit das Erntegut entlang der Gutflusslinie 15 nicht von der Aufsammeltrommel 3 abhebt, besteht der gezeigte Rollenniederhalter 10,12,21 aus zwei in Gutflussrichtung hintereinander geschalteten Niederhalterrollen 10,12. Diese sind vor beziehungsweise teilweise oberhalb der Aufsammeltrommel 3 angeordnet. Beide Niederhalterrollen 10,12 sind frei drehbar an beiden Enden jeweils an einem Haltesegment 21 gegenüber der Aufsammeltrommel 3 höhenbeweglich angelenkt. Beidseitig des Niederhalters 10,12,21 erstreckt sich jeweils ein Haltearm 8, welcher mit dem Halterahmen 6 fest verbunden ist. Das Haltesegment 21 ist jeweils an dem in Fahrtrichtung 7 vorne liegenden Ende mit einem Haltearm 8 mittels einer gemeinsamen Drehverbindung 20 verbunden gelagert. Vom Haltearm 8 ausgehend, greift ein feststehender Bolzen 23 in das Langloch 22 in dem Haltesegment 21 ein und schränkt die Bewegung des Haltesegments 21 in der Drehverbindung 20 entsprechend ein. Hierdurch wird die mögliche Höhenbeweglichkeit der Niederhalterrollen 10,12 gegenüber der Aufsammeltrommel 3 und dem Förderboden 11 vorgegeben. Eine vorteilhafte Kombination von Niederhalterelementen 10,12,31,32, stellt die Anordnung einer Niederhalterrolle 10 mit einem entgegen der Fahrtrichtung 7 nachfolgenden Niederhalterblechs 31 und wenigstens einem von dort aus zur Abgabeseite der Pickup 1 erstreckenden Niederhalterstabes 35 als Niederhalter dar. Die Niederhalterrolle 10 übernimmt in dieser Kombination vorteilhaft die Aufgabe des Niederhaltens und der Gutumlenkung. Die nachfolgenden Niederhalterelemente 31,35 übernehmen, neben der Aufgabe der Niederhaltung, ferner die erfindungsgemäße Förderung des Erntegutes quer zur Fahrtrichtung 7. Der gesamte Niederhalter 10,12,21,31,32 mit seinen einzelnen Niederhalterelementen 10,12,21,31,32 und den Gutleitelementen 26,33,35 wird über eine gemeinsame Halterung 8 vor beziehungsweise oberhalb des Aufsammelorgans 3 beabstandet gehalten und kann in einer gemeinsamen Drehverbindung 20 gelagert sein. Vorteilhaft sind auch getrennte Anlenkungen der einzelnen Niederhalterelemente 10,12,31,32 zur Anpassung an unterschiedliche Erntegutschichtdicken denkbar. Hierdurch kann dann auch eine einstellbare Wirkungsweise des jeweiligen Niederhalterelementes 10,12,31,32 sowie des wenigstens einen Gutleitelementes 26,33,35 erreicht werden. Das Gutleitelement 33,35 selbst, kann jeweils durch eine einstellbare Anlenkung außerdem in seiner Wirkungsweise verändert werden. An Stelle der gezeigten Bolzen 23 und Langlöcher 22, können zur Vorgabe der Höhenbeweglichkeit beziehungsweise auch zur Einstellung des Auflagedrucks des Niederhalters 10,12,21,31,32 auf das Erntegut, wenigstens ein weiteres bekanntes Stellelemente eingesetzt werden. Geeignet sind hierfür beispielsweise mechanische, hydraulische oder aktive Anschläge oder Stellglieder mit gegebenenfalls Dämpfungs- und/oder Federungseigenschaften. Hierdurch lassen sich dann dem Erntegut angepasste erfindungsgemäße Gutleiteigenschaften der Niederhalterelemente 10,12,31,32,33,35 erreichen sowie ein gleichmäßiger Erntegutfluss und außerdem eine Harmonisierung des Erntegutflusses durch die Pickup 1 bewirken.
Die Niederhalterrolle 12 ist an dem jeweiligen Ende mit einer in dieser Figur 1 nicht näher dargestellten erfindungsgemäßen Schneckenwendelung 26 versehen. Der Niederhalterrolle 12 ist im Erntegutfluss eine als Fördereinrichtung dienende, angetriebene Förderschnecke 18 nachgeordnet. Diese Förderschnecke 18 ist etwa oberhalb des wannenförmigen Förderbodens 11 fest an den Haltearmen 8 angelenkt. Diese Förderschnecke 18 führt das Erntegut von der gesamten Aufnahmebreite der Pickup 1 auf die Breite der Einzugswalzen 5 zusammen. Das Erntegut wird von den auf der Förderschnecke 18 aufgesetzten Förderelementen 14 unterhalb des Walzenkerns 25 hindurchgefördert und an die Einzugswalzen 5 übergeben.

In Figur 2 wird eine Draufsicht auf die in Figur 1 dargestellte Pickup 1 gezeigt. An den Haltearmen 8 sind jeweils über die Drehverbindung 20 und den Haltesegmenten 21 beidseitig zwei Niederhalterrollen 10,12 teilweise oberhalb der Aufsammeltrommel 3 angeordnet. Die Niederhalterrolle 10 besitzt eine über die Länge der Niederhalterrolle 10 erstreckende Profilierung mit mehreren radial abstehenden Stegen 28. Das Erntegut läuft, bei einer Bewegung der Pickup 1 in Fahrtrichtung 7, unterhalb der Niederhalterrolle 10 entlang der gezeigten Gutflusslinien 15, 16, 17 ein und versetzt diese, bei Kontakt mit dem Erntegut und durch seine Profilierung, in eine Drehbewegung. Auf einer weiteren Niederhalterrolle 12 sind erfindungsgemäß an der dem jeweiligen Haltesegment 21 zugewandten Seite der Niederhalterrolle 12, Gutleitelemente in Form von Schneckenwendelungen 26 umfangsseitig angebracht. Diese Schneckenwendelungen 26 erstrecken sich symmetrisch von den Haltesegmenten 21 aus zur Mitte der Pickup 1 hin und sind so gewendelt, dass bei einer vom Erntegut angeregten Rotation der Niederhalterrolle 12 eine Förderung des Erntegutes zur Mitte der Pickup 1 hin bewirkt wird. Auf dem sich axial erstreckenden mittleren Bereich des Rollenkerns 29 der Niederhalterrolle 12, etwa auf der Breite der Einzugswalzen 5, sind umfangsseitig gleichmäßig verteilt mehrere radial abstehende Stege 24 angeordnet. Der überwiegende Teil des aufgenommenen Erntegutes durchläuft die Pickup 1 entlang der Gutflusslinie 15. Daher greift dieser Bereich der Niederhalterrolle 12 mit den aufgesetzten Stegen 24, vorrangig in die Oberfläche des Erntegutes ein und bewirkt eine entsprechende Rotation der Niederhalterrolle 12. Die an den jeweiligen Enden der Niederhalterrolle 12 erfindungsgemäß vorhandenen Gutleitelemente, in Form von Schneckenwendelungen 26, bewirken durch die Rotation, dass das in dem Bereich der Schneckenwendelungen 26 durchlaufende Erntegut eine Förderung quer zur Gutflussrichtung 15, etwa entlang der gezeigten Gutlusslinien 16, 17 erfährt. Dieser Effekt wird durch die bereichsweise unterschiedlichen Durchmesser der Niederhalterrolle 12 weiter verstärkt. Der mit den Stegen 24 besetzte Rollenkern 29, ist mit einem kleineren Durchmesser versehen als die Bereiche der Niederhalterrolle 12 mit den Schneckenwendelungen 26. Der kleinere Durchmesser der Niederhalterrolle 12 ist, wie zuvor ausgeführt, bestimmend für die Drehzahl der Niederhalterrolle 12. Die Schneckenwendelungen 26 besitzen, durch die größeren Durchmesser der Niederhalterrolle 12, daher umfangsseitig eine höhere Geschwindigkeit als das in den Wirkungsbereich der Niederhalterrolle 12 einlaufende Erntegut. Hierdurch wird somit eine verstärkte erfindungsgemäße Förderung des Erntegutes quer zur Fahrtrichtung 7 zur Mitte der Pickup 1 hin bewirkt. Die unterschiedlichen Durchmesser der Niederhalterrolle 12 können sich auch stetig über die gesamte Länge der Niederhalterrolle 12 oder sich nur bereichsweise über dieselbe erstrecken. Die Übergänge zwischen zwei unterschiedlichen Durchmesserbereichen können dabei wie dargestellt abgestuft oder durch stetige Übergänge angepasst ausgeführt werden. Wie in dieser Figur gezeigt, kann der Durchmesserunterschiede entlang einer Niederhalterrolle 10,12 durch eine entsprechende Ausführung des Gutleitelementes, wie beispielsweise durch die gezeigt Ausführung der Höhe der Schneckenwendelung 26 und der Stege 24, bewirkt werden. Auch durch weitere Ausführungsformen der Gutleitelemente, wie zum Beispiel durch axial erstreckende keilförmiges Bleche oder Stege, lassen sich diese gewünschten Unterschiede im Durchmesser entlang einer Niederhalterrolle 12 erreichen. In einer weiteren Ausführungsform, wird der Durchmesserunterschied einer Niederhalterrolle 10,12 durch einen im Durchmesser unterschiedlichen Rollenkern 29 erreicht. Damit nun in der Hintereinanderschaltung von unterschiedlichen Niederhaltern 10,12,21,31,32, insbesondere bei Niederhalterrollen 10,12 mit bereichsweise unterschiedlichen Durchmessern, zwischen den einzelnen Niederhalterelementen 10,12,21,31,32 keine Gutstauungen durch unüberdeckte Niederhaltebereiche entstehen, können die benachbarten Niederhalterelemente 10,12,21,31,32 so ausgestaltet oder angeordnet werden, dass diese Zwischenbereiche von diesen mit abgedeckt werden. Beispielsweise können zwei benachbart angeordnete Niederhalterrollen 10,12 mit jeweils zumindest bereichsweise unterschiedlichen Durchmessern so ausgebildete werden, dass der in einem Bereich der Niederhalterrolle 12 vorhandene kleinere Durchmesser, von einem größeren Durchmesser des korrespondierenden Bereichs einer weiteren Niederhalterrolle 10 abgedeckt wird. Auch können zusätzliche Niederhalterelemente 10,12,31,32,33,35 wenigstens bereichsweise in diese Bereiche zur Niederhaltung von Erntegut eingefügt werden.
Der gezeigte Niederhalter 10,12,21 mit zwei Niederhalterrollen 10,12 kann auch durch mehrfach hintereinander geschaltete Niederhalterrollen 10,12 ausgeführt werden, wobei ferner jede Niederhalterrolle 10,12 jeweils mit Schneckenwendelungen 26 ausgestattet sein kann. Hierdurch wird dann eine bessere Vergleichmäßigung und ein schonendere Förderung des Erntegutes quer zur Gutflussrichtung erreicht. Eine erste Niederhalterrolle 10 besitzt hierbei beispielsweise nur an den beiden außenliegenden Enden eine zur Mitte der Pickup 1 hin fördernde Schneckenwendelung 26. Auf einer nachfolgenden Niederhalterrolle 12 werden weitere Schneckenwendelungen 26, mit weiter zur Mitte der Pickup 1 hin erstreckenden Wendelungen 26, angeordnet. Gefolgt davon befindet sich beispielsweise abschließend noch ein Stabniederhalter 32 mit zur Abgabeseite der Pickup 1 hin angestellten Stäben 33.
Zur weiteren Verbesserung der erfindungsgemäßen Querförderung des Erntegutes im Pickup 1 kann zwischen den einzelnen Niederhalterrollen 10,12 eine Antriebsverbindung bestehen. Je nach Auslegung dieser Antriebsverbindung können bekannte Ketten-, Keilriemen-, oder Zahnradantriebsverbindung verwendet werden. An den jeweiligen Lagerstellen 34,36 der Niederhalterrollen 10,12 im Haltesegment 21, kann beispielsweise jeweils ein Kettenrad auf die jeweilige Welle koaxial drehfest aufgesetzt und ein gegenseitiger Antrieb durch eine darauf aufgelegte Kette hergestellt werden. Ferner können auch mehrere Niederhalterrollen 10,12 antriebsverbunden wenigstens eine Niederhalterrolle 10,12 antreiben. Weiterhin ist auch denkbar, dass nur ein Teil der Niederhalterrollen 10,12 mit einem gemeinsamen Antrieb ausgeführt ist. Durch den Antrieb wird zum einen die Wirkung der Gutleitelemente 26 auf der Niederhalterrolle 12 erhöht und zum anderen wird auch eine momentan nicht mit dem Erntegut in Kontakt stehende Niederhalterrolle 10,12 von der weiteren Niederhalterrolle 10,12 in Drehbewegung gehalten oder versetzt. Dieses bewirkt einen kontinuierlicheren Erntegutfluss durch die Pickup 1
Zur Verringerung von Erntegutverlusten sowie zur aktiven Förderung des Erntegutes durch die Pickup 1, kann zumindest auch eine Niederhalterrolle 10,12 durch eine Antriebseinrichtung aktiv angetrieben werden. Zum Beispiel eignet sich hierfür ein bekannter elektromotorischer, hydraulischer oder mechanischer Antrieb. Dieser kann eine einzelne Niederhalterrolle 10,12 antreiben oder in eine Antriebsverbindung zumindest zwischen zwei Niederhalterrollen 10,12 eingreifen. Die Wirkungs- und Arbeitsweise der wenigstens einen Niederhalterrolle 10,12 wird hierdurch verbessert und kann außerdem, durch eine mögliche Steuerung der Antriebsdrehzahl, aktiv beeinträchtigt werden.
Das Erntegut verlässt den Niederhalterbereich der Niederhalterrolle 12 jeweils mit einer etwa durch die Gutflusslinien 15, 16, 17 angezeigten Gutflussrichtung. Die nachgeschaltete, bereichsweise mit Förderschneckenwendelungen 19, 27 ausgebildete Fördereinrichtung 18, fördert das erfindungsgemäß ausgerichtete Erntegut dann weiter bis auf die Breite der Einzugswalzen 5 zusammen. Anschließend wird durch die auf dem Walzenkern 25 der Fördereinrichtung 18 aufgesetzten Förderelemente 14, die gesamte Erntegutmenge unterschlächtig den Einzugswalzen 5 zugeführt.

In Figur 3 wird ein Längsschnitt durch eine Pickup 1 mit einem Blechniederhalter 31 gezeigt. Dieser Niederhalter 31 ist in Fahrtrichtung 7 vor der Förderschnecke 18 und oberhalb der Aufsammeltrommel 3 zwischen den beiden Haltearmen 8 angelenkt angebracht. Zwischen den Haltearmen 8 erstreckt sich ein Querträger 30, der entweder fest oder drehbeweglich mit seinen Enden mit den Haltearmen 8 verbunden ist. An dem Querträger 30 ist das Niederhalterblech 31 über die gesamte Aufnahmebreite der Pickup 1 erstreckend angelenkt. Zwei oder mehrere über die Breite des Niederhalterblechs 31 verteilte Abstützungen 37, geben in Verbindung mit der Anlenkung am Querträger 30 den Abstand des Niederhalterblechs 31 gegenüber der Aufsammeltrommel 3 vor. Auf der der Aufsammeltrommel 3 und der dem Erntegut zugewandten Seite des Niederhalterblechs 31 ist zumindest ein Gutleitelement in Form eines Stabes 35 angebracht. Der Stab 35 erstreckt sich von dem Querträger 30 aus entgegen der Fahrtrichtung 7 bis über das gesamte Niederhalterblech 31 hinaus zur Förderschnecke 18 hin. Dieser Stab 35 kann auch in Form einer Blechwolbung oder Prägung auf oder in dem Niederhalterblech 31 ausgeführt sein. Ferner sind Ausführungen des Gutleitelementes mit runden, quadratischen oder rechteckförmigen Querschnittsflächen bis hin zu geformten, geraden oder keilförmigen Leitblechen denkbar.

Figur 4 zeigt eine Draufsicht auf die zum Teil in Figur 3 gezeigte Pickup 1. Der Niederhalter 31,32 wird in dieser Draufsicht durch die eingezeichnet Mittelachse 38 getrennt in zwei möglichen Ausführungsformen, zum einen als ein Blechniederhalter 31 und zum anderen als ein Stabniederhalter 32, dargestellt. Über die Aufnahmebreite der Pickup 1 verteilt, sind an dem Blechniederhalter 31 mehrere Stäbe 35 der Aufsammeltrommel 3 zugewandt angebracht. Diese sind in dem der Förderschneckenwendelung 27 vorgelagerten Bereich stärker gegenüber der Fahrtrichtung 7 angestellt als die Stäbe 35 in Bereich vor den Einzugswalzen 5. Eine Verstellung der Anstellung der Stäbe 35 einzeln oder gemeinsam, ist in einfacher Weise durch jeweilige Schraubverbindungen mit dem Niederhalterblech 31 und den darin dann befindlichen Langlöchern realisierbar. Der weiterhin gezeigte Stabniederhalter 32 besteht aus mehreren Stäben 33, die über der Aufnahmebreite der Pickup 1 verteilt an einem Querträger 30 befestigt, sich von diesem zur Förderschnecke 18 hin erstrecken. Diese Stäbe 33 habe etwa die Form des in Figur 3 dargestellten Stabes 35. Das von den Zinken 4 in Verbindung mit der Aufsammeltrommel 3 aufgenommene Erntegut, wird von dem Stabniederhalter 32 niedergehalten und gleichzeitig in Richtung der Förderschnecke 18 umgelenkt. Die gegenüber der Fahrtrichtung 7 angestellte Ausrichtung der Stäbe 33, bewirkt gleichzeitig eine erfindungsgemäße Förderung des Erntegutes quer zur Fahrtrichtung 7.

### Bezugszeichenliste:

- 1: Pickup
- 2: Boden
- 3: Aufsammeltrommel
- 4: Zinken
- 5: Einzugswalzen
- 6: Halterahmen
- 7: Fahrtrichtung
- 8: Haltearm
- 9: Drehrichtung
- 10: Niederhalterrolle
- 11: Förderboden
- 12: Niederhalterrolle
- 13: Trägerelement
- 14: Förderelemente
- 15: Gutflusslinie
- 16: Gutflusslinie
- 17: Gutflusslinie
- 18: Förderschnecke
- 19: Förderschneckenwendelung
- 20: Drehverbindung
- 21: Haltesegment
- 22: Langloch
- 23: Bolzen
- 24: Steg
- 25: Walzenkern
- 26: Schneckenwendelung
- 27: Förderschneckenwendelung
- 28: Steg
- 29: Rollenkern
- 30: Querträger
- 31: Blechniederhalter
- 32: Stabniederhalter
- 33: Stab
- 34: Lagerstelle
- 35: Stab
- 36: Lagerstelle
- 37: Abstützung
- 38: Mittelachse

## Patentansprüche

1. Aufsammler (1) für Erntemaschinen mit einem Aufsammelorgan (3) und einem hierzu obenseitig angeordneten quer zur Fahrtrichtung (7) der Erntemaschine erstreckenden Niederhalter (10,12,21,31,32),
**dadurch gekennzeichnet, dass** der Niederhalter (10,12, 21, 31, 32) wenigstens ein Rollenniederhalter (10, 12, 21) ist, der wenigstens teilweise als Gutleitelement (26, 33, 35) ausgebildet ist und wobei das Gutleitelement zumindest eine Förderung des Erntegutes quer zur Gutflussrichtung (15) bewirkt.

2. Aufsammler nach Anspruch 1,
**dadurch gekennzeichnet, dass**
der Niederhalter wenigstens einen Stabniederhalter (32) und/oder einen Blechniederhalter (31) aufweist.

3. Aufsammler (1) nach einem oder mehreren der vorherigen Ansprüche,
**dadurch gekennzeichnet, dass**
das Gutleitelement wenigstens eine Schneckenwendelung (26) ist.

4. Aufsammler (1) nach einem oder mehreren der vorherigen Ansprüche,
**dadurch gekennzeichnet, dass**
das Gutleitelement (26,33,35) wenigstens bereichsweise eine Förderung des Erntegutes quer zur Gutflussrichtung (15) bewirkt.

5. Aufsammler (1) nach einem oder mehreren der vorherigen Ansprüche,
**dadurch gekennzeichnet, dass**
wenigstens ein Gutleitelemente (26,33,35) so angestellt in den Erntegutfluss eingreift, dass hierdurch eine Zusammenführung des Erntegutes zur Abgabeseite des Aufsammlers (1) hin bewirkt wird.

6. Aufsammler (1) nach einem oder mehreren der vorherigen Ansprüche,
**dadurch gekennzeichnet, dass**
das Gutleitelement (26,33,35) als wenigstens eine umfangseitige Schneckenwendelung (26) auf einer Niederhalterrolle (10,12) ausgeführt ist.

7. Aufsammler (1) nach einem oder mehreren der vorherigen Ansprüche,
**dadurch gekennzeichnet, dass**
zumindest eine Niederhalterrolle (10, 12) des Niederhalters zumindest bereichsweise mit unterschiedlichen Durchmessern ausgeführt ist.

8. Aufsammler (1) nach einem oder mehreren der vorherigen Ansprüche,
**dadurch gekennzeichnet, dass**
zumindest eine Niederhalterrolle (10, 12) aktiv angetrieben ist.

9. Aufsammler (1) nach einem oder mehreren der vorherigen Ansprüche,
**dadurch gekennzeichnet, dass**
zumindest eine Niederhalterrolle (10, 12) wenigstens eine weitere Niederhalterrolle (10, 12) antreibt.

10. Aufsammler (1) nach einem oder mehreren der vorherigen Ansprüche,
**dadurch gekennzeichnet, dass**
der Niederhalter (10,12,21) sich aus wenigstens zwei Niederhalterrolle (10, 12) mit unterschiedlichen Durchmessern zusammensetzt.

11. Aufsammler (1) nach einem oder mehreren der vorherigen Ansprüche,
**dadurch gekennzeichnet, dass**
der Niederhalter (10,12,21,31,32) mit wenigstens einer Einrichtung zur Veränderung des Auflagedruckes wenigstens eines Niederhalterelementes (10,12,31,32,33,35) auf das Erntegut versehen ist

## Claims

1. A pickup device (1) for harvesters comprising a pickup member (3) and a hold-down device (10, 12, 21, 31, 32) which is arranged at the top side in relation thereto and which extends transversely with respect to the direction of travel (7) of the harvester,
**characterised in that**
the hold-down device (10, 12, 21, 31, 32) is at least one roller hold-down device (10, 12, 21) which is at least partly in the form of a material guide element (26, 33, 35) and wherein the material guide element provides at least for conveyance of the crop material transversely with respect to the direction of material flow (15).

2. A pickup device according to claim 1 **characterised in that** the hold-down device has at least one bar hold-down device (32) and/or plate hold-down device (31).

3. A pickup device (1) according to one or more of the preceding claims **characterised in that** the material guide element is at least one screw flight (26).

4. A pickup device (1) according to one or more of the preceding claims **characterised in that** the material guide element (26, 33, 35) provides at least in region-wise manner for conveyance of the crop material transversely with respect to the direction of material flow (15).

5. A pickup device (1) according to one or more of the preceding claims **characterised in that** at least one material guide element (26, 33, 35) engages into the flow of crop material at such an incidence that the crop material is thereby caused to be brought together towards the discharge side of the pickup device (1).

6. A pickup device (1) according to one or more of the preceding claims **characterised in that** the material guide element (26, 33, 35) is in the form of at least one peripheral screw flight (26) on a hold-down roller (10, 12).

7. A pickup device (1) according to one or more of the preceding claims **characterised in that** at least one hold-down roller (10, 12) of the hold-down device is of different diameters at least in region-wise manner.

8. A pickup device (1) according to one or more of the preceding claims **characterised in that** at least one hold-down roller (10, 12) is actively driven.

9. A pickup device (1) according to one or more of the preceding claims **characterised in that** at least one hold-down roller (10, 12) drives at least one further hold-down roller (10, 12).

10. A pickup device (1) according to one or more of the preceding claims **characterised in that** the hold-down device (10, 12, 21) is composed of at least two hold-down rollers (10, 12) of different diameters.

11. A pickup device (1) according to one or more of the preceding claims **characterised in that** the hold-down device (10, 12, 21, 31, 32) is provided with at least one device for altering the contact pressure of at least one hold-down element (10, 12, 31, 32, 33, 35) on the crop material.

## Revendications

1. Dispositif de ramassage (1) pour machines de récolte, avec un organe de ramassage (3) et un abaisseur (10, 12, 21, 31, 32) disposé en partie haute par rapport à ce dernier et transversalement à la direction de déplacement (7) de la machine de récolte, **caractérisé en ce que** l'abaisseur (10, 12, 21, 31, 32) est au moins un abaisseur à rouleaux (10, 12, 21)qui est conformé au moins partiellement en élément de guidage de produit récolté (26, 33, 35), l'élément de guidage de produit récolté ayant au moins pour effet d'amener le produit transversalement à sa direction d'écoulement (15).

2. Dispositif de ramassage selon la revendication 1, **caractérisé en ce que** l'abaisseur comprend au moins un abaisseur à barres (32) et/ou un abaisseur à tôle (31).

3. Dispositif de ramassage (1) selon une ou plusieurs des revendications précédentes, **caractérisé en ce que** l'élément de guidage de produit récolté est au moins un ensemble hélicoïdal tournant (26).

4. Dispositif de ramassage (1) selon une ou plusieurs des revendications précédentes, **caractérisé en ce que** l'élément de guidage de produit récolté (26, 33, 35) a pour effet d'amener au moins par endroits le produit transversalement à sa direction d'écoulement (15).

5. Dispositif de ramassage (1) selon une ou plusieurs des revendications précédentes, **caractérisé en ce qu'**au moins un élément de guidage de produit récolté (26, 33, 35) s'engage dans le flux de produit récolté avec une position telle qu'il a pour effet de regrouper le produit récolté vers le côté sortie du dispositif de ramassage (1).

6. Dispositif de ramassage (1) selon une ou plusieurs des revendications précédentes, **caractérisé en ce que** l'élément de guidage de produit récolté (26, 33, 35) en au moins un ensemble hélicoïdal tournant périphérique (26) disposé sur un rouleau abaisseur (10, 12).

7. Dispositif de ramassage (1) selon une ou plusieurs des revendications précédentes, **caractérisé en ce qu'**au moins un rouleau abaisseur (10, 12) de l'abaisseur présente au moins par endroits des diamètres différents.

8. Dispositif de ramassage (1) selon une ou plusieurs des revendications précédentes, **caractérisé en ce qu'**au moins un rouleau abaisseur (10, 12) est soumis à un entraînement actif.

9. Dispositif de ramassage (1) selon une ou plusieurs des revendications précédentes, **caractérisé en ce qu'**au moins un rouleau abaisseur (10, 12) entraîne au moins un autre rouleau abaisseur (10, 12).

10. Dispositif de ramassage (1) selon une ou plusieurs des revendications précédentes, **caractérisé en ce que** l'abaisseur (10, 12, 21) se compose d'au moins deux rouleaux abaisseurs (10, 12) de diamètres différents.

11. Dispositif de ramassage (1) selon une ou plusieurs des revendications précédentes, **caractérisé en ce que** l'abaisseur (10, 12, 21, 31, 32) est muni d'au moins un dispositif pour faire varier la pression d'appui d'au moins un élément abaisseur (10, 12, 31, 32, 33, 35) sur le produit récolté.
